# EUROPEAN PATENT APPLICATION

(11) **EP 4 220 091 A1**
(43) Date of publication of application: **02.08.2023**
(21) Application number: 23153590.7
(22) Date of filing: 27.01.2023
(51) Int. Cl.: G01D 5/14

(54) **LONG-STROKE LINEAR POSITION SENSOR**

(30) Priority: 28.01.2022 CN 202210108479
(71) Applicant: Suzhou Littelfuse OVS Co., Ltd., Suzhou, Jiangsu 215155 (CN)
(72) Inventor: Fang, Xudong, Suzhou, 215155 (CN); Kruger, Jay, Suzhou, 215155 (CN); Xu, Elsie, Suzhou, 215155 (CN)
(74) Representative: Arnold & Siedsma

(57) **Abstract**

Provided are linear position sensing systems. In some embodiments, a position sensing system may include a sensor and a magnet assembly adjacent the sensor, wherein the magnet assembly includes a first magnet and a second magnet each having a first width and a first height, and wherein the first width and the first height are different. The magnet assembly may include a third magnet and a fourth magnet adjacent the first and second magnets, each of the third and fourth magnets having a second width and a second height, wherein the second width and the second height are the same.

## Description

### Field of the Disclosure

Embodiments of the present disclosure relate generally to linear position sensors and, more particularly, to a long-stroke linear position sensor system including a plurality of magnets.

### Background of the Disclosure

It is often necessary to measure the position or displacement of two elements relative to each other. A particularly useful measurement is the linear displacement of a moving stage as it travels along a stationary base. This displacement can be measured with many different sensing technologies over a large range of accuracies, with different levels of complexity, and at a wide range of costs.

Some common apparatuses for measuring linear displacement include linear encoders, capacitive sensors, eddy current sensors, a linear variable differential transformer, photoelectric or fiber optic sensors, or magnetic field sensors. Capacitive sensors are used with both conductive and nonconductive target materials but are very sensitive to environmental variables that change the dielectric constant of the medium between the sensor and the target, usually air. A linear variable differential transformer (LVDT) sensor has a series of inductors in a hollow cylindrical shaft and a solid cylindrical core. The LVDT produces an electrical output that is proportional to the displacement of the core along the shaft. The size and mounting of these coils or cores and the sensitivity of measurement are competing design factors in the use of eddy current or LVDT sensors.

Magnetic sensors such as Hall effect sensors, GMR sensors, AMR sensors, or permanent magnet linear contactless displacement (PLCD) sensors can be used with alternating magnetic poles to produce a sinusoidal output indicative of the sensor's linear motion. However, the initial position must be determined and each magnetic pole must be counted and phase data analyzed for greatest accuracy. A sensor that outputs voltage that is directly proportional to linear position has many advantages. However, for long stroke applications, a larger magnet is required, which increases EMI interference with other parts in proximity to the sensor.

What is needed is a magnetic linear displacement sensor with a simplified design and lower cost.

### Summary

In some embodiments, a position sensing system may include a sensor and a magnet assembly adjacent the sensor, wherein the magnet assembly includes a first magnet and a second magnet each having a first width and a first height, and wherein the first width and the first height are different. The magnet assembly may further include a third magnet and a fourth magnet adjacent the first and second magnets, each of the third and fourth magnets having a second width and a second height, wherein the second width and the second height are the same.

In some embodiments, a long-stroke linear position sensor may include a sensor and a magnet assembly spaced apart from the sensor by an airgap. The magnet assembly may include a first magnet and a second magnet each having a first width and a first height, wherein the first width and the first height are different, and a third magnet and a fourth magnet each having a second width and a second height. The second width and the second height are the same, wherein the third magnet is positioned between the first and second magnets, and wherein the second magnet is positioned between the third and fourth magnets.

In some embodiments, a magnet assembly of a linear position sensor may include a first magnet and a second magnet each having a first width and a first height, wherein the first width and the first height are different. The magnet assembly may further include a third magnet and a fourth magnet each having a second width and a second height, wherein the second width and the second height are the same, wherein the third magnet is positioned between the first and second magnets, and wherein the second magnet is positioned between the third and fourth magnets.

### Brief Description of the Drawings

The accompanying drawings illustrate exemplary approaches of the disclosure, including the practical application of the principles thereof, and in which:
**FIG. 1** is a block diagram illustrating a position sensing system according to embodiments of the present disclosure;
**FIG. 2** illustrates a magnetic field of a magnet assembly according to embodiments of the present disclosure;
**FIG. 3** is a graph illustrating a relationship between displacement of the magnet assembly and a detected magnetic flux density according to embodiments of the present disclosure;
**FIG. 4** is a graph illustrating raw ATAN2 of the field in the Z-X Plane according to embodiments of the present disclosure.
**FIG. 5** is a graph illustrating compensated output linearizing the output of the ATAN2 of the field in the Z-X Plane according to embodiments of the present disclosure.

The drawings are not necessarily to scale. The drawings are merely representations, not intended to portray specific parameters of the disclosure. The drawings are intended to depict typical embodiments of the disclosure, and therefore should not be considered as limiting in scope. Furthermore, certain elements in some of the figures may be omitted, or illustrated not-to-scale, for illustrative clarity.

### Detailed Description

Position sensing systems in accordance with the present disclosure will now be described more fully hereinafter with reference to the accompanying drawings, in which embodiments of the position sensing systems are shown. The position sensing systems, however, may be embodied in many different forms and should not be construed as being limited to the embodiments set forth herein. Rather, these embodiments are provided so that this disclosure will be thorough and complete, and will fully convey the scope of the system and method to those skilled in the art.

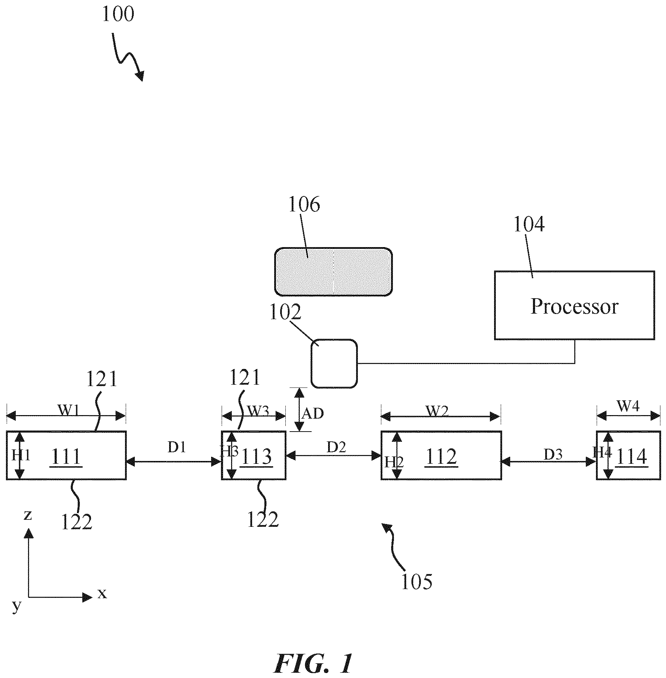

**FIG. 1** illustrates a block diagram of a position sensing system (hereinafter "system") 100, arranged in accordance with at least some embodiments of the present disclosure. As shown, the system 100 may include a sensor 102 in communication with a processor (e.g., microprocessor) 104, the sensor 102 and the processor 104 operable to detect a magnetic field from a magnet assembly 105 and to determine a position of the sensor 102 relative to the magnet assembly 105. In some embodiments, the system 100 may include a component 106 to be monitored, wherein the component 106 may move relative to the magnet assembly 105 and/or the sensor 102. More specifically, the component 106 may move linearly, e.g., along the x-direction. In some embodiments, the sensor 102 may be directly coupled to the component 106 such that the sensor and the component 106 move together. In some embodiments, the component 106 may be made of a ferromagnetic material, such as iron, nickel, or cobalt. Although non-limiting, the sensor 102 may be a magnet effect sensor, such as a Hall-effect sensor, anisotropic magneto-resistive sensor, giant magnetoresistance sensor, or tunnel magnetoresistance sensor.

As shown, the magnet assembly 105 may include a first magnet 111, a second magnet 112, a third magnet 113, and a fourth magnet 114 arranged in a line. Separate magnets instead of a single, large magnet beneficially reduces EMI interference with other parts. Each of the first magnet 111, second magnet 112, third magnet 113, and fourth magnet 114 may have a first end 121 opposite a second end 122, wherein the first and second ends 121, 122 represent opposite magnetic poles of each magnet. In the arrangement shown, each first end 121 is positioned closer to the sensor 102 than each second end 122. The first end 121 of the first magnet 111 may have a first polarity (e.g., N), the second end 122 of the first magnet 111 may have a second polarity (e.g., S), the first end 121 of the third magnet 113 may have the second polarity, and the second end 122 of the third magnet 113 may have the first polarity. Similarly, the first end 121 of the second magnet 112 may have the first polarity, the second end 122 of the second magnet 112 may have the second polarity, the first end 121 of the fourth magnet 114 may have the second polarity, and the second end 122 of the fourth magnet 114 may have the first polarity.

In this embodiment, the third magnet 113 may be positioned between the first and second magnets 111, 112, while the second magnet 112 may be positioned between the third and fourth magnets 113, 114. As shown, the first and third magnets 111, 113 may be separated (e.g., along the x-direction) by a first distance `D1', the third and second magnets 113, 112 may be separated by a second distance 'D2', and the second and fourth magnets 112, 114 may be separated by a third distance 'D3'. In this embodiment, D1 = D2 = D3. In other embodiments, one or more of D1, D2, and D3 may differ. Although non-limiting, each of D1, D2, and D3 may be 12mm in one example.

As further shown, the first magnet 111 may have a first width `W 1' and a first height `H1', the second magnet 112 may have a second width 'W2' and a second height `H2', the third magnet 113 may have a third width 'W3' and a third height 'H3', and the fourth magnet 114 may have a fourth width 'W4' and a second height 'H4'. In some embodiments, H1 = H2 = H3 = H4. In other embodiments, one or more of the heights may differ. Furthermore, in some embodiments, W1 = W2 and W3 = W4, wherein W1 and W2 may be at least two times as large as W3 and W4. Although non-limiting, in one example, W1 and W2 may be 8mm, while W3 and W4 may be 4mm. H3 and H4 may also be 4mm. A thickness (e.g., in the y-direction) of each of the first magnet 111, the second magnet 112, the third magnet 113, and the fourth magnet 114 may be 2mm. In other embodiments, the thickness may vary between magnets.

As further shown, D1 - D3 may be 1.5 times as large as W1 and W2, while D1 - D3 may also be three times as large as W3 and W4. The magnet assembly 105 may be separated from the sensor 102 by a mechanical airgap distance 'AD', which may be 4.5mm in some embodiments. With the arrangement and dimensions shown, the system 100 is configured to sense a linear stroke distance between 25mm - 70mm. In one specific example, the system is configured to sense a linear stroke distance of approximately 50mm. It will be appreciated that one or more of the distances and/or dimensions of the system 100 can be modified, as desired, to influence the effective linear stroke sensing distance.

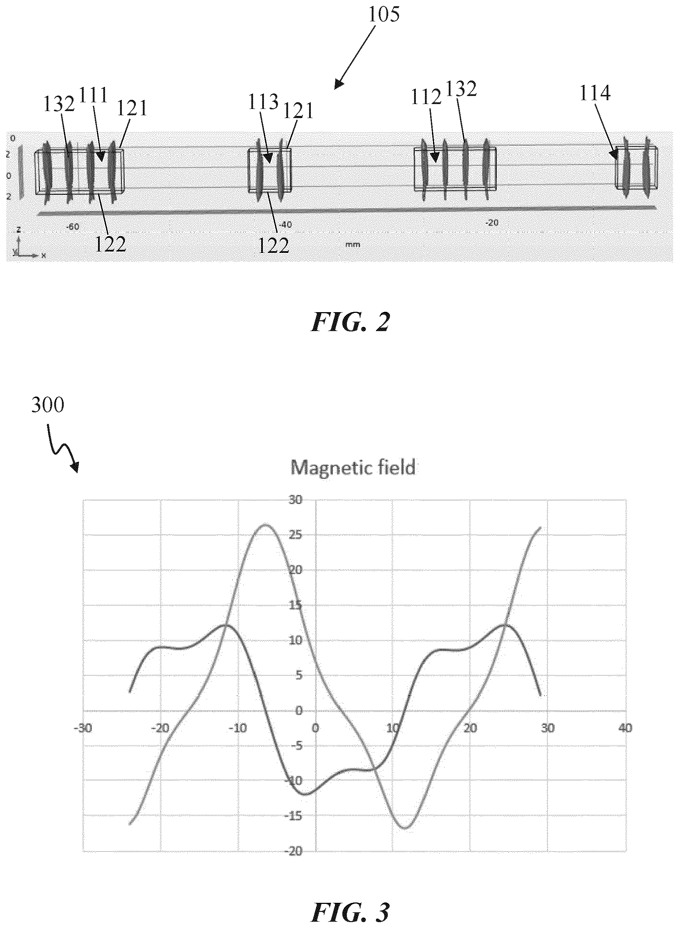

**FIGs. 2-5** demonstrate a non-limiting magnetic simulation result for magnets 111 - 114 of the magnet assembly 105. As shown in **FIG. 2**, a magnetic field 132 of the first and second magnets 111, 112 may be generally oriented from the second end 122 to the first end 121. Meanwhile, a magnetic field 134 of the third and fourth magnets 113, 114 may be generally oriented from the first end 121 to the second end 122.

**FIG. 3** is a graph 300 illustrating a relationship between a displacement of the magnet assembly 105 and the detected magnetic flux density, as well as a relationship between the displacement of the magnet assembly 105 and an output of the sensor 102.

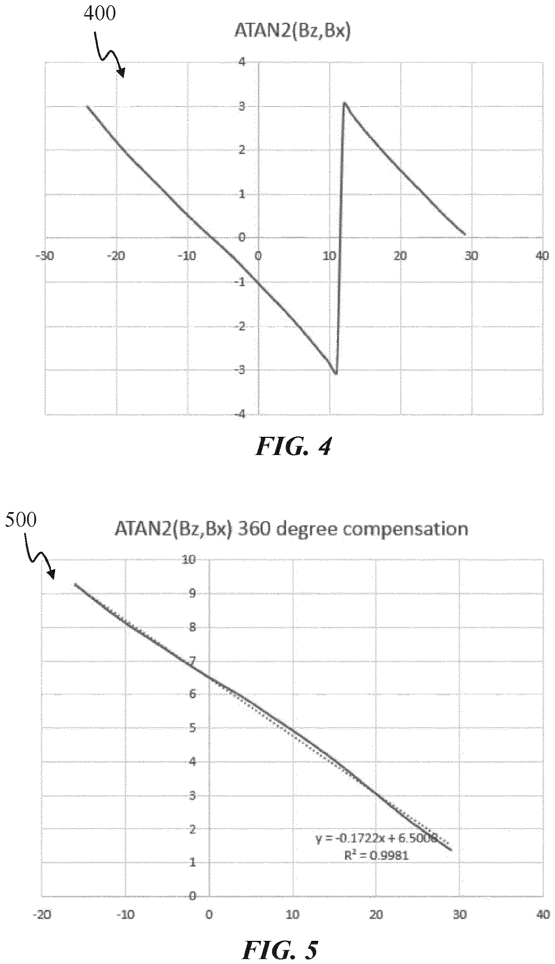

**FIG. 4** is a graph 400 illustrating a raw signal from the magnetic field generated as the magnet array crosses though the hall sense plate. The field output needs a correction compensation calculated on it, so the output will have a linear signal rather than the sawtooth signal, as shown in FIG. 4. This graph is only a representative example and the actual application output may differ.

**FIG. 5** is a graph 500 illustrating an ATAN2 (Bz,Bx) 360 degree compensation, which is the calibrated output of the raw signal shown in **FIG. 4**. This takes the sawtooth signal that would be generated, and after calibration, it now shows the corrected output to ensure a usable signal across the traveled distance. This graph is only a representative example and the actual application output may differ.

The foregoing discussion has been presented for purposes of illustration and description and is not intended to limit the disclosure to the form or forms disclosed herein. For example, various features of the disclosure may be grouped together in one or more aspects, embodiments, or configurations for the purpose of streamlining the disclosure. However, it should be understood that various features of the certain aspects, embodiments, or configurations of the disclosure may be combined in alternate aspects, embodiments, or configurations. Moreover, the following claims are hereby incorporated into this Detailed Description by this reference, with each claim standing on its own as a separate embodiment of the present disclosure.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

The use of "including," "comprising," or "having" and variations thereof herein is meant to encompass the items listed thereafter and equivalents thereof as well as additional items. Accordingly, the terms "including," "comprising," or "having" and variations thereof are open-ended expressions and can be used interchangeably herein.

The phrases "at least one", "one or more", and "and/or", as used herein, are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

Furthermore, identification references (e.g., primary, secondary, first, second, third, fourth, etc.) are not intended to connote importance or priority, but are used to distinguish one feature from another. The drawings are for purposes of illustration only and the dimensions, positions, order and relative sizes reflected in the drawings attached hereto may vary.

Furthermore, the terms "substantial" or "substantially," as well as the terms "approximate" or "approximately," can be used interchangeably in some embodiments, and can be described using any relative measures acceptable by one of ordinary skill in the art. For example, these terms can serve as a comparison to a reference parameter, to indicate a deviation capable of providing the intended function. Although non-limiting, the deviation from the reference parameter can be, for example, in an amount of less than 1%, less than 3%, less than 5%, less than 10%, less than 15%, less than 20%, and so on.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Furthermore, the present disclosure has been described herein in the context of a particular implementation in a particular environment for a particular purpose. Those of ordinary skill in the art will recognize the usefulness is not limited thereto and the present disclosure may be beneficially implemented in any number of environments for any number of purposes. Thus, the claims set forth below are to be construed in view of the full breadth and spirit of the present disclosure as described herein.

## Claims

1. A position sensing system, comprising:
a sensor; and a magnet assembly adjacent the sensor, the magnet assembly comprising:
a first magnet and a second magnet each having a first width and a first height, wherein the first width and the first height are different; and
a third magnet and a fourth magnet adjacent the first and second magnets, each of the third and fourth magnets having a second width and a second height, wherein the second width and the second height are the same.

2. The position sensing system of claim 1, wherein the third magnet is positioned between the first and second magnets.

3. The position sensing system of claims 1 or 2, wherein the second magnet is positioned between the third and fourth magnets.

4. The position sensing system of any of the preceding claims, wherein the first width is greater than the second width.

5. The position sensing system of any of the preceding claims, wherein the first width is two times as large as the second width.

6. The position sensing system of any of the preceding claims, wherein the first height and the second height are the same.

7. The position sensing system of any of the preceding claims, wherein the first width is two times as large as the first height and two times as large as the second height.

8. The position sensing system of any of the preceding claims, wherein a first distance between the first magnet and the third magnet is equal to a second distance between the third magnet and the second magnet.

9. The position sensing system of any of the preceding claims, further comprising a processor operable to receive a signal from the sensor and to determine a position of the sensor relative to each of the first magnet, the second magnet, the third magnet, and the fourth magnet.

10. A long-stroke linear position sensor, comprising:
a sensor; and
a magnet assembly spaced apart from the sensor by an airgap, the magnet assembly comprising:
a first magnet and a second magnet each having a first width and a first height, wherein the first width and the first height are different; and
a third magnet and a fourth magnet each having a second width and a second height, wherein the second width and the second height are the same, wherein the third magnet is positioned between the first and second magnets, and wherein the second magnet is positioned between the third and fourth magnets.

11. The long-stroke linear position sensor of claim 10 with one or more of the following:
wherein the first width is greater than the second width;
wherein the first width is two times as large as the second width;
wherein the first height and the second height are the same;
wherein the first width is two times as large as the first height and two times as large as the second height;
wherein a first distance between the first magnet and the third magnet is equal to a second distance between the third magnet and the second magnet.

12. A magnet assembly of a linear position sensor, the magnet assembly comprising:
a first magnet and a second magnet each having a first width and a first height, wherein the first width and the first height are different; and
a third magnet and a fourth magnet each having a second width and a second height, wherein the second width and the second height are the same, wherein the third magnet is positioned between the first and second magnets, and wherein the second magnet is positioned between the third and fourth magnets.

13. The magnet assembly of claim 12, wherein the first width is two times as large as the second width.

14. The magnet assembly of claim 12 or 13, wherein the first height and the second height are the same.

15. The magnet assembly of any of the claims 12-14, wherein the first width is two times as large as the first height and two times as large as the second height, and/or wherein a first distance between the first magnet and the third magnet is equal to a second distance between the third magnet and the second magnet.
